# EUROPEAN PATENT APPLICATION

(11) **EP 2 735 762 A2**
(43) Date of publication of application: **28.05.2014**
(21) Application number: 13193581.9
(22) Date of filing: 19.11.2013
(51) Int. Cl.: F16F 15/134

(54) **Dual mass flywheel**

(30) Priority: 26.11.2012 KR 20120134598
(71) Applicant: Pyeong Hwa Clutch Industry Co. Ltd., Dalseo-Gu (KR)
(72) Inventor: Lee, Chun Gon, Dalseo-Gu (KR)
(74) Representative: Misselbrook, Paul

(57) **Abstract**

A dual mass flywheel (100) includes: a primary flywheel (105) having a ring gear (101) and connected to an output shaft of an engine; a secondary flywheel (106) connected to an input shaft of a transmission; a coupling unit (107) for coupling the primary flywheel (105) and the secondary flywheel (106); a plurality of drive units (110) coupled to the primary flywheel (105) and the secondary flywheel (106) and in which spring guides (109) are coupled to opposite sides of a torsion spring (108) to dampen noise and vibrations while a torque of the primary flywheel (105) is transferred to the secondary flywheel (106), wherein a unit groove (111) for accommodating the drive units (110) and a hub (112) formed at an axis center of the primary flywheel (105) are integrally formed by casting the primary flywheel (105), one or more embossments (115) are formed on an outer surface of each of the spring guides to which the opposite ends of the torsion spring (108) constituting the drive unit to minimize a frictional area thereof with the unit groove (111).

## Description

### BACKGROUND OF THE INVENTION

### 1. Field of the invention

The present invention relates to a dual mass flywheel, and more particularly to an improved dual mass flywheel which effectively mitigates an impact and noise generated while causing no loss of torque in a process of transferring power of an engine to a transmission and has a simpler configuration due to a decreased number of components.

### 2. Description of the Prior Art

A dual mass flywheel (DMF) for a vehicle is adapted to mitigate an impact between an engine and a transmission due to a dampening operation of an arc spring while a driving plate connecting a primary flywheel and a secondary flywheel are moved in conjunction with an arc spring mounted to the primary mass, thereby reducing vibrations and noise due to an abrupt acceleration of a vehicle such as gear noise and body booming.

If a driving force of the engine is transferred to the primary mass due to the above-described technical configuration, the driving plate is rotated while the primary mass is rotated, rotating the secondary mass connected to the transmission.

Then, since a rotation power of the primary mass presses one end of the arc spring and the driving plate is rotated while being pressed by an opposite end of the arc spring, a collision of the primary mass and the driving plate generated when the primary mass is abruptly rotated by a driving power of the engine or a rotation speed of the secondary mass is abruptly reduced can be prevented by the arc spring.

According to the related art, dual mass flywheels having various configurations have been developed and used, and an example thereof is disclosed in Korean Patent No. 1099122, which will be described with reference to FIG. 7.

The dual mass flywheel 1 according to the related art includes a primary mass 10 to which a driving power from the driving unit is transferred, a cover plate 20 coupled to the primary mass 10, a driving plate 30 rotated by the cover plate 20, a secondary mass 40 coupled to the driving plate 30 to transfer a rotation power to a driven unit, a buffering member 50 interposed between the cover plate 20 and the driving plate 30, a fixing unit 70 for restraining movement of the buffering member 50, and a finishing unit for preventing the buffering member 50 from contacting the cover plate 20 and the driving plate 30.

The buffering member 50 includes a first buffering member 52 interposed between the cover plate 20 and the driving plate 30 to transfer a driving power and buffer an impact generated between the cover plate 20 and the driving plate 30 at the same time, and a second buffering member 54 interposed between the cover plate 20 and the driving plate 30 to perform a secondary absorbing operation.

The fixing unit 70 includes a cap 72 installed at an end of the first buffering member 52 to allow the first buffering member 52 to move circumferentially and restrain the first buffering member 52 from moving radially, and a stopper 74 positioned inside the cap 72 to restrain the cap 72 from moving radially.

As the dual mass flywheel according to the related art uses a principle of generating a torque by an angle when a spring is circumferentially operated by a driving plate, a force is generated by which the spring is apt to deviate to a circumferential outside in the process of compressing or expanding the spring circumferentially. Accordingly, since a unit for reinforcing strength should be provided at the location of the spring, the number of components increases as well as structural change which, in turn, increases the weight of the dual mass flywheel.

In particular, an outer portion of the spring contacts related elements while the spring is operated circumferentially, causing a joint. Accordingly, grease is applied to spring guides gripping the spring or opposite ends of the spring to exclude generation of a joint. However, the grease is leaked in the operation process, disturbing a normal operation of other components, and when a sealing unit for preventing leakage is added, the number of component increases.

Further, since the spring guides and the primary mass make surface-contact with each other, friction becomes severe and frictional resistance becomes more serious due to the viscosity of the grease applied for lubrication, disturbing a smooth operation thereof. Thus, it is difficult to expect a smooth operation when foreign substances are deposited between the spring guides and the primary mass and normal operation is impossible, which lowers quality and durability of the dual mass flywheel and lowers the quality and durability of the vehicle to which the dual mass flywheel is mounted.

Furthermore, since the primary mass is formed of a metal plate with a press and the hub drive unit coupled to the primary mass is forged, many processes are required to manufacture the dual mass flywheel, making the entire manufacturing process complex and increasing manufacturing costs.

In addition, since a separate driving plate used as a unit for operating a buffering member such as a spring and spring guides accommodated in the primary mass is fixed to a bottom surface of the secondary mass through a fixing unit, high costs and time are consumed to classify and assemble many components, productivity is lowered, and manufacturing costs increase.

### SUMMARY OF THE INVENTION

Accordingly, the present invention has been made to solve the above-mentioned problems occurring in the prior art, and an object of the present invention is to provide an improved dual mass flywheel which effectively mitigates an impact and noise generated while causing no loss of torque in a process of transferring power of an engine to a transmission and has a simpler configuration due to a decreased number of components.

In order to accomplish this object, there is provided a dual mass flywheel including: a primary flywheel having a ring gear and connected to an output shaft of an engine; a secondary flywheel connected to an input shaft of a transmission; a coupling unit for coupling the primary flywheel and the secondary flywheel; a plurality of drive units coupled to the primary flywheel and the secondary flywheel and in which spring guides are coupled to opposite sides of a torsion spring to dampen noise and vibrations while a torque of the primary flywheel is transferred to the secondary flywheel, wherein a unit groove for accommodating the drive units and a hub formed at an axis center of the primary flywheel are integrally formed by casting the primary flywheel, one or more embossments are formed on an outer surface of each of the spring guides to which the opposite ends of the torsion spring constituting the drive unit to minimize a frictional area thereof with the unit groove.

According to the present invention, there is provided a dual mass flywheel comprising: a primary flywheel having a ring gear and connected to an output shaft of an engine; a secondary flywheel connected to an input shaft of a transmission; a coupling unit for coupling the primary flywheel and the secondary flywheel; a plurality of drive units coupled to the primary flywheel and the secondary flywheel and in which spring guides are coupled to opposite sides of a torsion spring to dampen noise and vibrations while a torque of the primary flywheel is transferred to the secondary flywheel, wherein: a unit groove for accommodating the drive units and a hub formed at a central axis of the primary flywheel are integrally formed by casting the primary flywheel; spring guides coupled to the opposite sides of a torsion spring constitute a drive unit; and one or more embossments are formed on an outer surface of each of the spring guides to minimize a friction surface area thereof with the unit groove.

The dual mass flywheel may further comprise two pairs of separation prevention bosses which are integrally and separately formed to prevent a first and second set of drive units coupled to the unit groove from deviating from the proper position thereof; a pair of operation slots which are provided so that driving pins can be located between the pair of separation prevention bosses; and the two pairs of separation prevention bosses group the plurality of drive units into the first and second set of drive units.

According to the present invention, the number of manufacturing processes can be reduced by forming the primary flywheel through casting and integrally forming the hub, operability and durability can be secured by deleting a driving plate and integrally forming a unit capable of replacing a driving plate on a bottom surface of the secondary flywheel, and improving the spring guides such that the spring guides can make point contacts, and the number of manufacturing costs can be reduced by significantly reducing the number of components and enhancing productivity and assembling efficiency.

Further, the weight of the dual mass flywheel can be reduced by significantly reducing the number of components of the dual mass flywheel, contributing to light weight and improvement of fuel ratio of the vehicle, securing competitiveness.

### BRIEF DESCRIPTION OF THE DRAWINGS

The above and other objects, features and advantages of the present invention will be more apparent from the following detailed description taken in conjunction with the accompanying drawings, in which:
FIG. 1 is an exploded perspective view showing a dual mass flywheel according to the present invention;
FIG. 2 is a sectional view showing a coupled state of the dual mass flywheel according to the present invention;
FIG. 3 is a partially broken plan view showing the dual mass flywheel according to the present invention;
FIG. 4 shows perspective views showing a top surface of a primary flywheel and a bottom surface of a secondary flywheel of the dual mass flywheel according to the present invention;
FIG. 5 is a perspective view showing a spring guide of the dual mass flywheel according to the present invention;
FIG. 6 is an illustrative view showing an operation of the dual mass flywheel according to the present invention; and

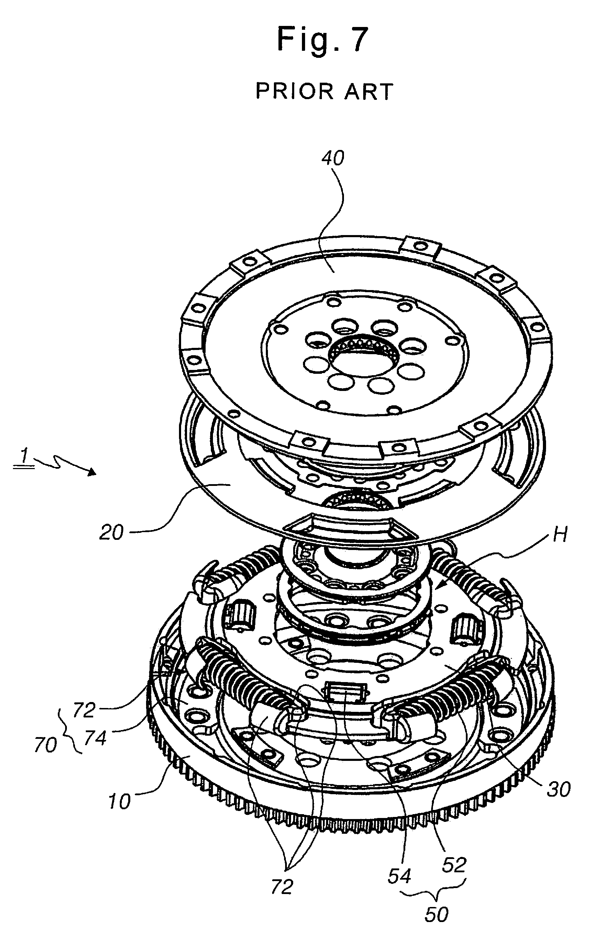

FIG. 7 is an exploded perspective view showing the dual mass flywheel according to the prior art.

### DETAILED DESCRIPTION OF THE PREFERRED EMBODIMENTS

Hereinafter, an exemplary embodiment of the present invention for achieving the above objective will be described with reference to the accompanying drawings.

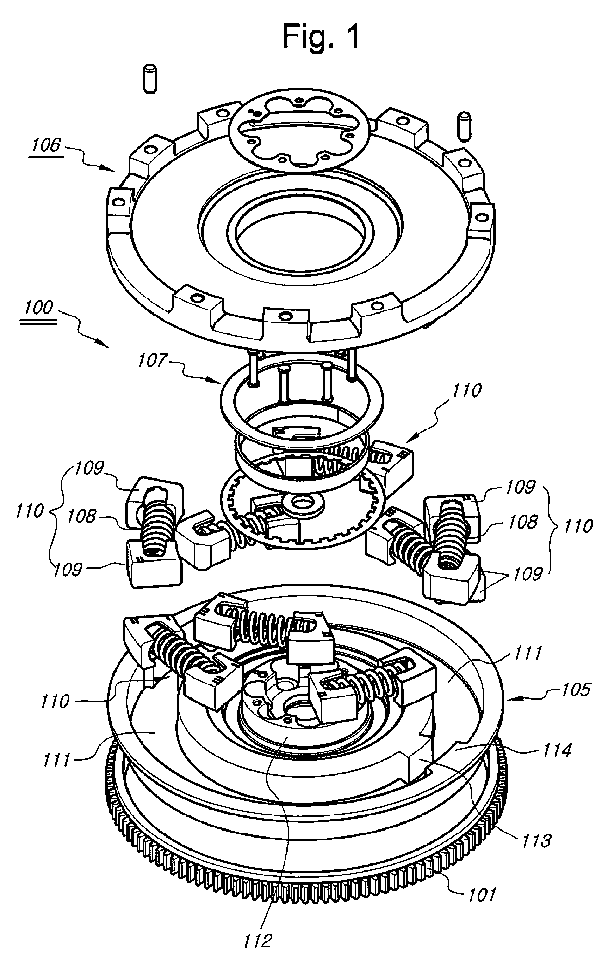

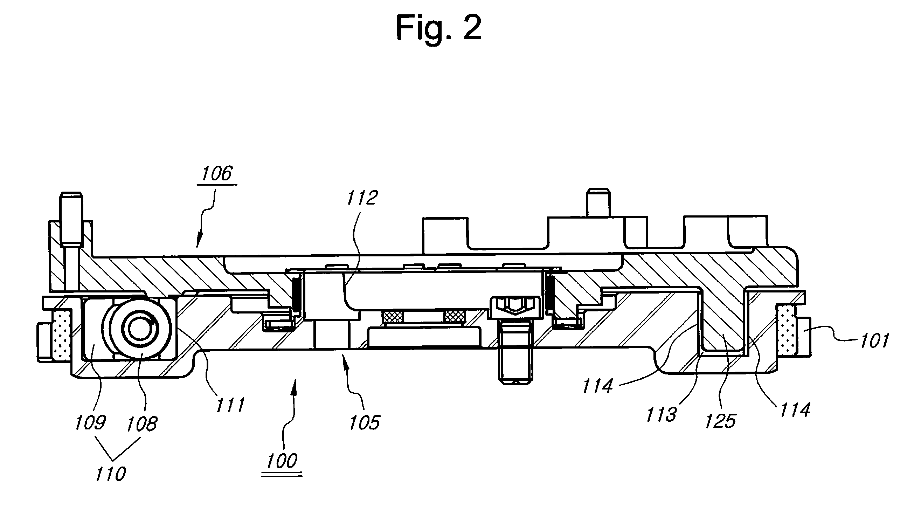

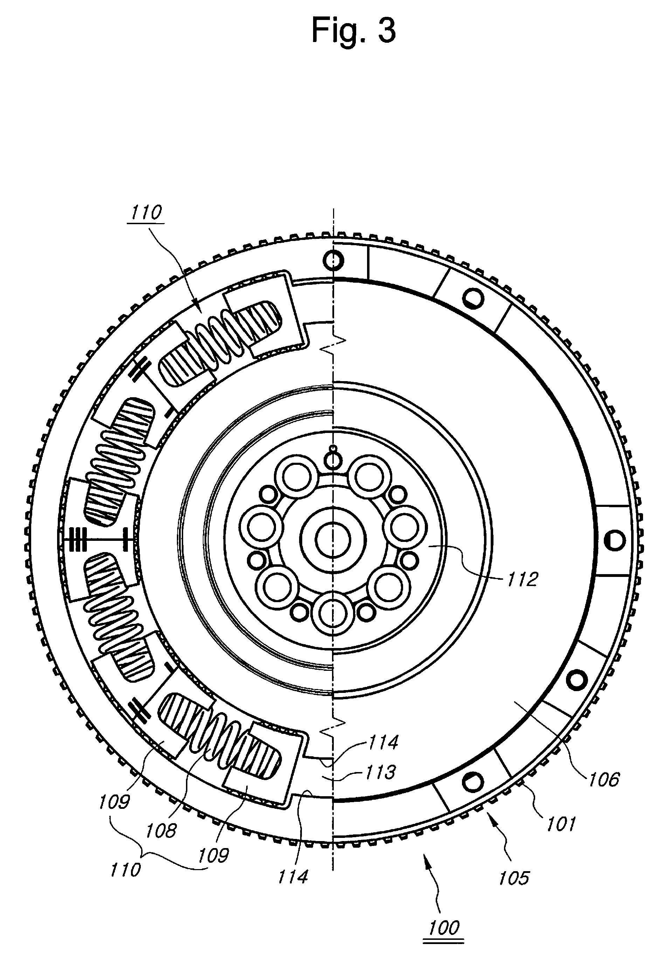

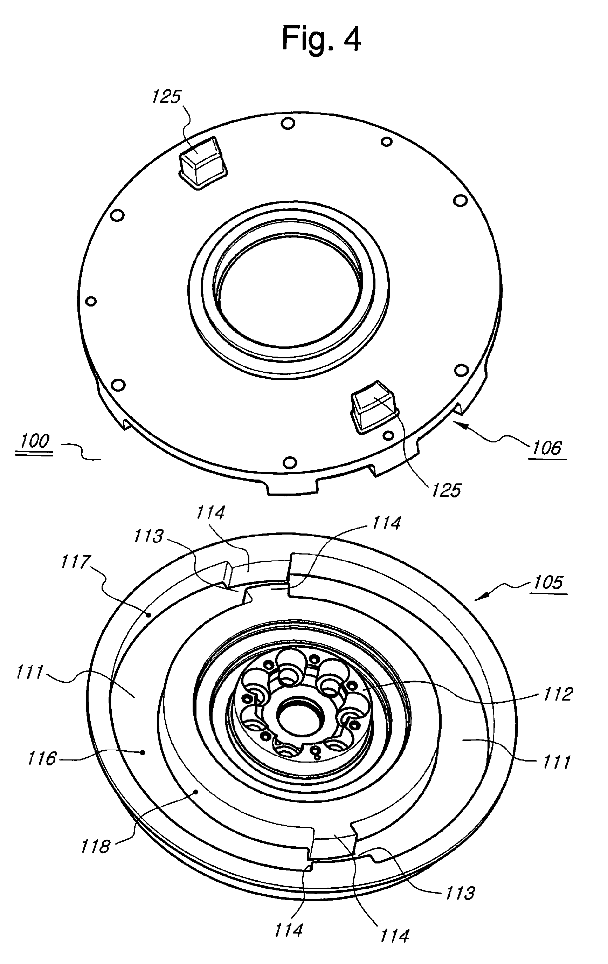

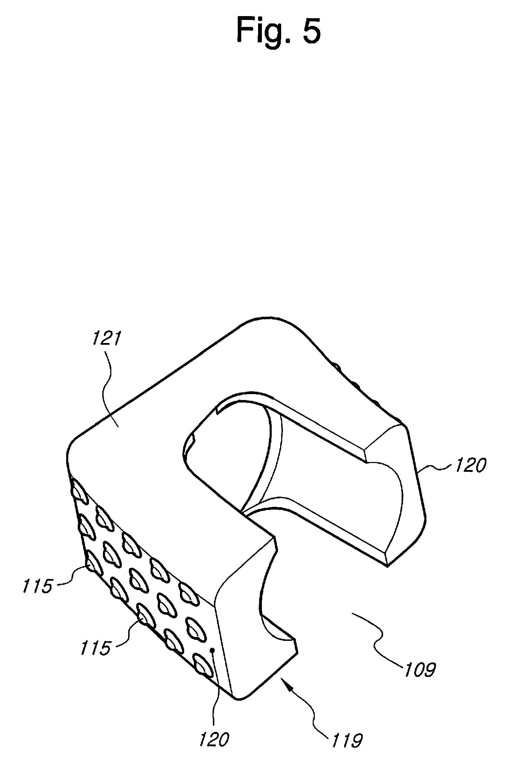

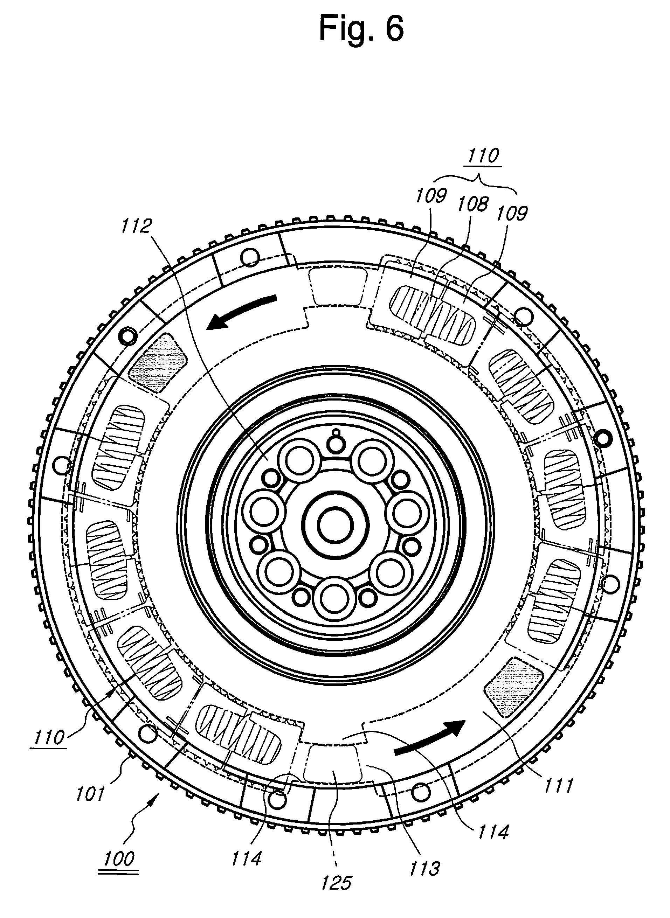

FIG. 1 is an exploded perspective view showing a dual mass flywheel according to the present invention. FIG. 2 is a sectional view showing a coupled state of the dual mass flywheel according to the present invention. FIG. 3 is a partially broken plan view showing the dual mass flywheel according to the present invention. FIG. 4 shows perspective views showing a top surface of a primary flywheel and a bottom surface of a secondary flywheel of the dual mass flywheel according to the present invention. FIG. 5 is a perspective view showing a spring guide of the dual mass flywheel according to the present invention. FIG. 6 is an illustrative view showing an operation of the dual mass flywheel according to the present invention.

As shown in FIG. 1, the dual mass flywheel 100, according to the present invention, includes a primary flywheel 105 having a ring gear 101 connected to an output shaft of an engine, a secondary flywheel 106 connected to an input shaft of a transmission, a coupling unit 107 for coupling the primary flywheel 105 and the secondary flywheel 106, the coupling unit 107 having an ancillary configuration such as a sleeve, a bushing, a rivet, and a flange, a drive unit 110 coupled to an upper surface (with reference to FIG. 1) of the primary flywheel 105 and a bottom surface of the secondary flywheel 106 and configured by coupling spring guides 109 to opposite sides of a torsion spring 108 to dampen noise and vibrations generated while a torque of the primary flywheel 105 is transmitted to the secondary flywheel 106.

The present invention improves the primary flywheel 105 and the secondary flywheel 106 accommodating the drive unit 110, and the drive unit 110 to secure stable operability and durability while reducing the number of parts of the dual mass flywheel 100 and facilitating production and assembling.

The unit groove 111 for accommodating the drive unit 110 is integrally formed in the primary flywheel 105 though casting and a hub 112 is formed at an axis center of the primary flywheel 105 to reduce the number of related components and reduce the number of production and assembly processes.

Two pairs of separation prevention bosses 114 each of which has an operation slot 113 therebetween are formed above and below a center line of the unit groove 111 to prevent the left and right drive units 110 from deviating from the proper positions thereof.

One or more embossments 115 are formed on outer surfaces of the spring guides 109 to which opposite ends of the torsion spring 108 constituting the drive unit 110 to minimize frictional areas of the spring guides 109 with the unit groove 111 formed in the primary flywheel 105, securing operability and preventing foreign substances generated by frictions in the operation process from being jammed between the spring guides 109 and the unit groove 111.

It is apparent that the embossments 115 may be formed on all of a bottom surface 119 and opposite side surfaces 120 of the spring guide 109 contacting a bottom surface 116, an outer wall surface 117, and an inner wall surface 118 of the unit groove 111, and an upper surface 121 of the spring guide 109 contacting a bottom surface of the secondary flywheel 106 but may be formed only on opposite side surfaces 120 of the spring guide 109 where frictions is most severe, and locations and shapes of the embossments 115 may be variously determined according to situations.

A pair of driving pins 125 for pressing and dampening the drive unit 110 during a rotation of the drive unit 110 integrally protrudes from a bottom surface of the secondary flywheel 106 such that they are located in the operation slots 113 formed between the separation prevention bosses 114 formed in the primary flywheel 105 to press the drive unit 110.

It is preferable that the driving pins 125 are formed to be smaller than the operation slots 113 to be prevented from interfering with or disturbing the drive units 110 stopped by the separation prevention bosses 114.

Hereinafter, an operation of the dual mass flywheel 100 according to the present invention will be described.

The present invention is adapted to transmit rotation power of the primary flywheel 105 connected to an output shaft of the engine to the second flywheel 106 to transmit the rotation power to the transmission, normally transmit a torque necessary for travel of the vehicle in the process, and reduce noise, an impact, and vibrations generated in the power transmitting process. It is well known in the art that the function of the present invention is performed by the drive unit 100 interposed between the primary flywheel 105 and the secondary flywheel 106, and a detailed description thereof will be omitted and effects and advantages of the present invention will be described below.

Since the primary flywheel 105 is integrally formed with the hub 112 through casting, the number of parts of the primary flywheel 105 can be reduced while facilitating manufacturing and assembling of the primary flywheel 105 and significantly reduce manufacturing costs.

In particular, since the unit groove 111 for accommodating the drive unit 110 including the torsion springs 108 and the spring guides 109 is integrally formed with the primary flywheel 105, the primary flywheel 105 can be stably maintained. Further, since the embossments 115 are formed in the spring guides 109, frictions of the spring guides 109 with the unit groove 111 can be reduced, securing operability and preventing foreign substances such as metal powder generated in the operation process from being jammed between the spring guides 109 and the unit groove 111 while omitting injection of lubricant.

In particular, since the drive unit 110 is pressed by the driving pins 125 integrally formed on a bottom surface of the secondary flywheel 106 instead of a driving plate for operating the drive unit 110, the number of assembly and production processes can be significantly reduced while remarkably reducing the number of components. Accordingly, interference between the components can be excluded through the simple configuration while reducing manufacturing costs and securing operability.

According to the present invention, since a unit for accommodating, maintaining, pressing, and operating the drive unit is integrally formed in the primary and secondary flywheels, the number of components can be reduced while facilitating assembling thereof, reducing manufacturing costs, and reducing the weight thereof, and frictional resistances can be minimized by improving the spring guides, securing excellent operability.

## Claims

1. A dual mass flywheel (100) comprising:
a primary flywheel(105) having a ring gear(101) and connected to an output shaft of an engine;
a secondary flywheel (106) connected to an input shaft of a transmission;
a coupling unit (107) for coupling the primary flywheel (105) and the secondary flywheel (106);
a plurality of drive units (110) coupled to the primary flywheel (105) and the secondary flywheel (106) and in which spring guides (109) are coupled to opposite sides of a torsion spring (108) to dampen noise and vibrations while a torque of the primary flywheel (105) is transferred to the secondary flywheel (106),
wherein:
a unit groove (111) for accommodating the drive units (110) and a hub (112) formed at an axis center of the primary flywheel (105) are integrally formed by casting the primary flywheel (105); and
one or more embossments (115) are formed on an outer surface of each of the spring guides to which the opposite ends of the torsion spring(108) constituting the drive unit to minimize a frictional area thereof with the unit groove (111).

2. The dual mass flywheel (100) as claimed in claim 1, wherein:
two pairs of separation prevention bosses(114) are integrally and separately formed above and below a center axis of the unit groove(111) to prevent the left and right drive units coupled to the unit groove (111) from deviating from the proper position thereof; and
a pair of operation slots (113) are provided so that driving pins (125) are located respectively between the separation prevention bosses(114).

3. The dual mass flywheel (100) as claimed in claim 1, wherein the driving pins (125) are smaller than the operation slots (113) such that the driver unit stopped by the separation prevention bosses (114) is not interfered with by the driving pins (125).
